# EUROPEAN PATENT SPECIFICATION

(11) **EP 0 255 611 B1**
(45) Date of publication and mention of the grant of the patent: **20.10.1993**
(21) Application number: 87109807.5
(22) Date of filing: 07.07.1987
(51) Int. Cl.: F27B 9/02, F27B 9/14, F27B 9/06, F27D 7/00, F27D 5/00

(54) **Furnace for the high temperature treatment of plastic or hardened products**
Ofen für Hochtemperatur-Behandlung von plastischen oder gehärteten Produkten
Four pour le traitement à hautes températures de produits plastiques ou durs

(30) Priority: 08.07.1986 NO 862749
(43) Date of publication of application: 10.02.1988
(73) Proprietor: NORSK HYDRO A/S, 0257 Oslo 2 (NO)
(72) Inventor: Sandviknes, Jan, 0495 Oslo 4 (NO); Frosta, Steinar, 5875 Ardalstangen (NO); Naterstad, Tormod, 5875 Ardalstangen (NO)
(74) Representative: WILHELMS, KILIAN & PARTNER Patentanwälte

(56) References cited:
- EP-A- 0 023 316
- DE-B- 1 195 787
- DE-C- 304 016

## Description

The present invention relates to a furnace for the high temperature heat treatment of plastic or hardened products, especially the treatment (baking/calcining) of carbon bodies which are used for cells for the electrolytic reduction of alumina or for other electrometallurgical processes.

For baking carbon bodies for cells for the electrolytic reduction of alumina or for other elctrometallurgical processes, special furnaces are used for the heat treatment of these carbon bodies.

The carbon bodes are made in the required shape from a mixture of crushed coke or antracite and a binding agent which, for example, contains coal tar and pitch.

At room temperature the mixture of coke and binding agent is stiff, but it becomes softer at temperatures over about 120°C, giving off low-volatile components from the binder. When subjected to further heating over a period of time, to a maximum of 1300°C, the paste hardens, and its physical properties such as electrical conductivity and resistance against oxidation change.

Carbon bodies awaiting baking are ususally referred to as "green carbons". These green carbons may weigh several tons and have a length of two metres and more. To prevent their becoming deformed when passing through a temperature range in which they become soft, special precautions have to be taken. When using a known type of furnace for the baking of such carbon bodies, a so-called ring section type furnace, the green carbon bodies are placed in deep pits in the furnace which are made of refractory bricks. The space between the carbons and the pit walls is filled with coke to support the carbons. Coke breeze also serves to protect the carbons against air combustion.

Several pits are built adjacent to one another forming a so-called section.

The walls between the pits are provided with channels, or ducts, for the flue gases. Heat is supplied to the carbon by passing the flue gases through these ducts.

Flue gases from one section pass, through ducts, to the adjacent section. In this manner the flue gases can pass through several sections connected in series in a so-called firing zone. The usual fuels are oil or gas.

The flue gas vent and the burner manifold can be moved from section to section.

In a large ring furnace there may well be two rows of sections built alongside one another forming parallel rows. At the end of a section row, the flue gas ducts are connected to the ducts in the parallel section row. In this way, the sections are joined together to form a ring. It is for this reason that such a furnace for baking carbon bodies is known as a ring section furnace.

In a ring section furnace there may be several firing zones in which the temperature is regulated according to a given program. The first section in a firing zone has low temperature. These are followed by sections with higher temperature, whilst the final stage in a firing zone consists of those sections in which the carbons are cooled.

In a furnace of conventional design each section is closed at the top by means of a section cover, and this has to be removed when green carbons are to be charged or baked carbons removed.

On account of the special properties of carbon bodies, it is necessary to avoid too large temperature gradients during baking, as these would result in cracks in the final product. Each section must therefore follow an exact time and temperature program.

In the first part of the zone, the heating is up to 600°C by the heat in the flue gases from the last part of the firing zone. Later, in the temperature range from 600°C to the required top temperature (1200-1300°C) the heat must be supplied by the above mentioned combustion of oil or gas.

In the cooling zone the pit walls are cooled by air until the carbons can be removed without danger of oxidation.

As mentioned above, the firing zone in a ring section furnace is moved by moving the flue gas vent and the burner from section to section. This moving of the firing zone represents an invidious heating and cooling of each of the sections which is energy economically disadvantageous, firing technically cumbersome and causes thermic strains in the furnace material.

Further, the ring section furnaces are large and cumbersome to operate (run), and are expensive to build as they are made of refractory bricks.

A ring section furnace of the above mentioned type is described in the Norwegian patent No. 152.029.

The present invention provides a new furnace concept which is essentially improved compared with the above ring section type:
- The investment costs only represent 1/4 - 1/5 of the corresponding costs for a ring section furnace, as only the part of the furnace which is subject to high temperature heating is made of refractory material, while the other parts of the furnace is made of cheaper materials.
- The energy comsumption is less, as the firing zone is stationary (not moved around) and as the low-volatile components from the binder of the carbon bodies (when such products are heat treated) are used as fuel gas.
- Lower maintenance costs.
- More flexible technical construction (from 1000 to 10000 tons capacity), as the furnace has smaller overall length.

This is achieved by means of a furnace defined in the characterizing part of the present claim 1.

Preferred embodiments of the invention are defined in the subordinate claims.

The invention will now be described in more detail by means of an example and with reference to the drawings, where:
- Fig. 1: depicts a sectional perspective view of a known section built furnace,
- Fig. 2: depicts a sectional perspective view of the same furnace, but built in accordance with an improved, new version,
- Fig. 3: depicts a longitudinal section of a furnace according to the invention,
- Fig. 4: depits a cross-section of the furnace shown in Fig. 3 along the sectional line A-A, and
- Fig. 5: depicts a cross-section of the furnace shown in Fig. 3 along the sectional line B-B.

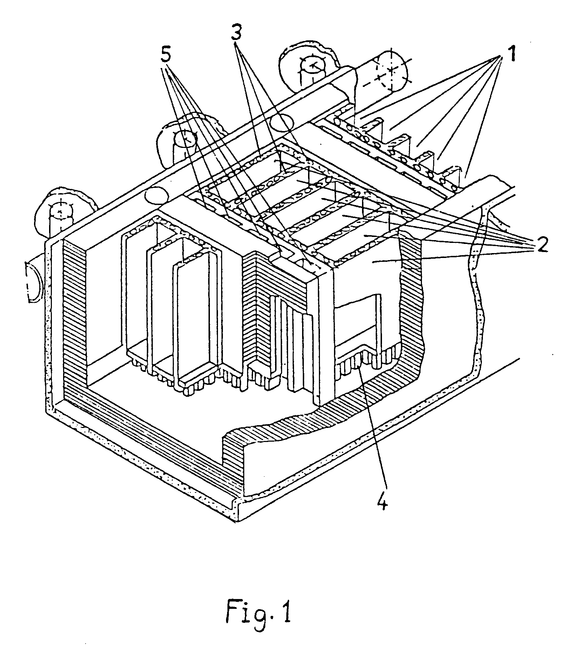

Fig. 1 is a partially cut-away illustration of a section of an earlier design with five pits 1. In the pit walls 2 there are flue gas ducts 3 through which flue gases flow downwards from the space under the section cover (not shown) and down into a space 4 under the bottom of the pits 1. The upward flow of the flue gases from below is through combustion chambers 5.

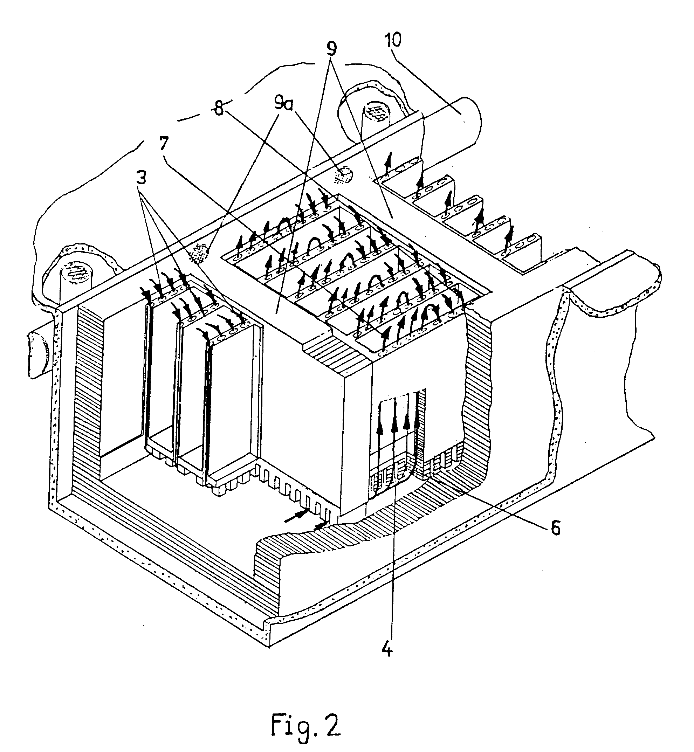

In Fig. 2 is shown a similar section from which, according to the improved version, the combustion chambers have been removed. Under the bottom of the pits there is provided a partition wall 6 which divides the space under the pits into two. In this manner, the flue gases flow upwardly through one group 7 and downwardly through another group 8 thereof.

In operation, a cover plate rests on section walls 9. The cover plate is not shown, but will, in Fig. 1 as well as in Fig. 2, ensure that the gas flow is led through the appropriate ducts.

From the space under the pits is a duct (not shown) to pipe connection points 9a on the top of the furnace. These are used for connecting the individual section to the flue ring main 9.

The firing can, as previously mentioned, be performed in several ways. The fuel can be fed, in whole or in part, into the space over each pit wall.

The firing zone is moved by moving the oil or gas burners in turn from one section to the next, all through the furnace. In this way the section close to the firing zone has the highest temperature, while the section at the end of the ring has the lowest temperature.

The cooling of the sections is achieved by circulating the combustion air through said sections. In this way the combustion air becomes preheated, whereby the efficiency of the furnace is improved.

The ring section furnace is, however, nevertheless expensive to operate and is based on manual handling of the carbon bodies when they are placed in and taken out of the pits.

As opposed to the ring section furnace where the products being heat treated are placed in stationary pits and where the firing zone is moved from one section to the next, the present invention relates to a principally different furnace in which the firing zone is stationary, which means that the firing zone is placed in the same position, while the products being heated are circulated through the furnace.

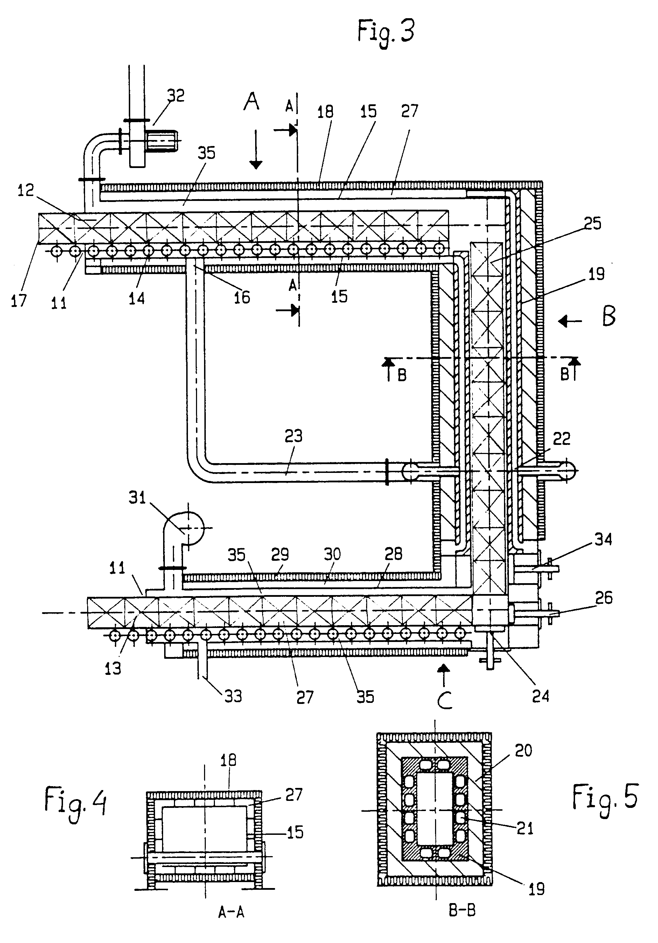

In Fig. 3, which depicts a longitudinal section of a furnace according to the invention, the products 17 are, at first, led through an upper, horizontal tunnel A in which they are being preheated. Further through a vertical shaft or pit B where the heat treatment (baking/calcining, drying) is taking place, and finally through a horizontal tunnel C in which the products are cooled.

The upper tunnel A is provided with a packing shirt 11 at its inlet end 12, preventing gas leakage between the products entering the furnace and the furnace inlet. A similar packing shirt is provided at the outlet B of the cooling tunnel C.

The products 17 are travelling through the tunnel A on a roll conveyor 14. The tunnel A may be slightly inclining so that the products are travelling by themselves due to the gravity force. It is, however, also possible to use other types of conveyors such as belt conveyors or a type of sliding conveyor where the products are placed on heat resistant pallets or the like.

In the tunnel A the products are preheated by means of radiant heat from the tunnel walls 15. The product (when made of carbon or the like) has to be kept from coming into contact with the air (oxygen) during the baking process, and is therefore surrounded by an inert gas atmosphere. It is of utmost importance that the packing shirt 11 at the inlet end 12, respectively outlet end 13, fits closely to the products so that the inert gas is prevented from escaping.

To be able to obtain a uniform temperature in the product, the tunnel A may be provided with a fan (not shown), adapted to blow the inert gas in a transverse direction. In the tunnel A there is disposed an outlet 16 for the low-volatile gases given off from the product during the baking process. These gases are used in the combustion process, as will be explained in a later part of the description.

The tunnel wall 15 is heated by means of flue gas, heating oil or other types of heat carriers passing on the outside of the tunnel wall 15, through ducts or the space 27 between the tunnel wall 15 and the external insulated wall 18. The tunnel wall 15 nay also be heated by means of electrical heating elements.

The product is transferred from the tunnel A down through the substantially vertical baking chamber or pit B. The product which, as previously mentioned, can be carbon bodies, is placed on top of each other in a stack 25 in the baking chamber B. At the bottom of the chamber B is disposed a piston, brackets or the like, which holds the product in the right position in the chamber. It is also possible, instead of the piston 24 or brackets, to use some kind of conveyor.

The piston or brackets lowers the product slowly through the chamber B, and when the top side of the uppermost product layer is on a level with the conveyor 14 in the tunnel A, a new product layer is pushed on top of the stack 25.

At the bottom of the chamber B is further disposed a clamping device 34 which holds the stack 25 temporarily so that the lowermost product layer can be pushed into the tunnel C.

The vertical baking chamber B is made of refractory bricks 19 or other types of isolating material. The refractory wall is provided with flue gas ducts 21. Air is supplied to the bottom end of the ducts 21 and 15 preheated by means of radiant heat from the product 17 as it is passing upwardly through the ducts. Combustible gases are supplied to the combustion chamber or firing zone 22 in the baking chamber B, through a pipe 23 which is connected to the upper horizontal tunnel A. The combustible gases and air supplied thorugh the ducts 21 react giving off heat to the refractory bricks as the flue gases from the combustion pass upwards through the ducts 21. When reaching the upper ends of the ducts 21, the flue gases are led into the ducts or space 27 between the tunnel wall 15 and the outer furnace wall 18 in the tunnel A, thereby, as previously mentioned, giving off heat to the product 17 through the tunnel wall 15.

After the baking of the product 17 is accomplished in the baking chamber B, the product 17 is transferred to the horizontal or slightly inclining tunnel C by means of a piston or the like. The tunnel C is constructionally for the most part built in the same way as the tunnel A, and consists of a tunnel wall 28 and an outer furnace wall 29. Fresh air is supplied to ducts 3 or a space 30 between the tunnel wall 28 and the outer wall 29 by means of a fan 31. The air supplied to the space 30 cools the tunnel wall 28 and thereby indirectly the product 17. When passing through the space 30, the air becomes heated and may be used as combustion air in the firing zone 22, or discharged to the atmosphere.

The flue gases are at first, as previously mentioned, led upwards through the ducts 21 in the refractory wall 19, and are thereafter led into the space or ducts 27 in the tunnel A. A fan 32 is disposed at the inlet end of the tunnel A which extracts the flue gases from the ducts 27 and transfer these through a pipe to a washing unit (not shown). The flue gases may, after being washed in the washing unit, be used as inert gas in a connection with the baking process. The inert gas is supplied to the furnace through an inlet 33 at the end of the tunnel C, and is gradually being mixed with the low-volatile gases which are given off during the baking process. The gas extracted from the tunnel A (at 16) and which is used as combustion fuel in the firing zone 22, is thus containing some amount of inert gas. Preferably the flue gases (after being washed) may be used as inert gas. It is, however, within the frame of the invention, also possible to use other types of inert gases such as nitrogen.

In the example mentioned above, it has been understood that the product being subject to heat treatment, such as carbon bodies for the electrolytic reduction of alumina, is giving off low-volatile gases which can be used as fuel gas in the firing zone 22.

The furnace can, however, also be used for the heat treatment (baking) of other products, not giving off such low-volatile gases.

In such a case it is necessary to use a larger amount of other types of fuels such as oil or gas, or even electricity by disposing electric elements in the vertical pit B.

Besides, it is not necessary to arrange the firing zone within the furnace. Thus, the firing zone can be disposed on the outside of the furnace by using a heat carrying medium, such as heat oil, which can be led through pipes (not shown) to ducts 21 and ducts 27 in the furnace, and thereafter is returned to the heat exchanger in the firing zone.

One of the main advantages of the furnace according to the present invention is that it is simple to build and has low investment costs.

This is mainly achieved by providing the furnace with only one firing zone 22 in the vertical baking chamber B, whereby only the vertical chamber B needs to be built of refractory material. The other parts of the furnace, the tunnel A and the tunnel C can be built of other materials such as steel.

## Claims

1. Furnace for high temperature heat treatment of plastic or hardened products (17), especially heat treatment (baking/calcining) of carbon bodies which are used for cells for the electrolytic reduction of alumina or for other electrometallurgical processes,
**characterized in that** the furnace consists of a first or upper horizontal or slightly inclining tunnel (A) in which the products (17) are preheated, a pit or baking chamber (B), connected to the first tunnel (A), in which the products (17) are subject to a high temperature heat treatment, and a second or lower horizontal or slightly inclining tunnel (C) connected to said baking chamber (B) in which the products (17) are cooled whereby the products (17) surrounded by an inert gas atmosphere, are transported through the furnace by means of horizontal conveyors (14) disposed in the first and the second tunnel (A, C) and a vertical conveyer (24, 26) disposed in the baking chamber (B).

2. Furnace according to claim 1,
**characterized in that**
the inclination angle of the first (A) and second tunnel (C) has such a size that the products can be transported by means of roller or sliding conveyors due to the gravity force.

3. Furnace according to claim 1,
**characterized in that**
the transportation of the products (17) is accomplished by means of power driven belt or chain conveyors or other types of conveyors.

4. Furnace according to claim 1,
**characterized in that**
the transportation of the products (17) in the chamber (B) is accomplished by means of a vertical piston/cylinder arrangement (24) disposed at the bottom of the chamber (B), or by means of vertically slideable brackets, slowly lowering the product stack in the chamber (B), a clamping device (34) disposed in the chamber (B), slightly above the bottom, which intermittently holds the product stack (25) so that the lowermost product in the stack can be transferred into the second tunnel (C).

5. Furnace according to claim 1, wherein the heating is accomplished by means of oil or gas combustion in a firing zone (22),
**characterized in that**
the firing zone is disposed in the lower part of the baking chamber (B) and that the chamber walls are provided with ducts (21), whereby the flue gases pass through the ducts (21) from the firing zone (22) and further are led into ducts (27) in the upper tunnel walls (15,18).

6. Furnace according to claim 5,
**characterized in that**
the flue gases, after having passed through the ducts (21,27) are extracted by means of a fan (32) and are transported to a gas washing arrangement, whereafter the flue gases, after being washed, are transferred to the furnace space (35), in which the heat treatment of the product takes place, through an inlet duct (33) in the cooling tunnel (C), thereby being used as inert gas under the heat treatment of the products.

7. Furnace according to claim 5, wherein the products being heat treated give off low-volatile combustible gases,
**characterized in that**
the low-volatile gases are extracted from the furnace space (35) and are led through pipes (23) to the firing zone (22), there being used as fuel gases for the combustion process.

8. Furnace according to claim 1,
**characterized in that**
the cooling of the products (17) in the cooling tunnel (C) is accomplished by means of fresh air which is led through ducts (30) disposed in the tunnel wall (28,29), and that the fresh air, after having passed through said ducts (30), is led into the ducts (21) at the bottom of the baking chamber (B), said ducts (21) being connected to the firing zone (22), whereby the fresh air can be used as combustion air in the firing zone (22) or is discharged to the atmosphere.

9. Furnace according to claim 1,
**characterized in that**
the preheating of the products (17) in the tunnel (A) and the baking of the products (17) in the baking chamber (B) is accomplished by means of electrical heating elements disposed in the tunnel walls (15), respectively chamber walls (19).

## Patentansprüche

1. Ofen für Hochtemperaturbehandlung von plastischen oder gehärteten Produkten (17), insbesondere Hitzebehandlung (Brennen, Glühen, Rösten) von Kohlenstoffkörpern, die für Zellen zur elektrolytischen Reduktion von Aluminium oder für andere elektrometallurgische Prozesse verwendet werden, dadurch gekennzeichnet, daß der Ofen aus einem ersten oder oberen horizontalen oder leicht geneigten Tunnel (A) in dem die Produkte (17) vorerhitzt werden, einem Stichherd oder einer Brennkammer (B) in Verbindung mit dem ersten Tunnel (A), in dem/der die Produkte (17) einer Hochtemperaturbehandlung unterzogen werden, und einem zweiten oder niederen horizontalen oder leicht geneigten Tunnel (C), der mit der Brennkammer (B) verbunden ist, in dem die Produkte (17) abgekühlt werden, besteht, wobei die Produkte (17), die von einer inerten Gasatmosphäre umgeben sind, durch den Ofen mittels horizontaler Fördermittel (14), die in dem ersten und dem zweiten Tunnel (A, C) angeordnet sind, und mittels eines vertikalen Fördermittels (24, 26), das in der Brennkammer (B) angeordnet ist, transportiert werden.

2. Ofen nach Anspruch 1, dadurch gekennzeichnet, daß der Neigungswinkel des ersten (A) und zweiten (C) Tunnels eine solche Größe hat, daß die Produkte mittels Roll- oder Gleitfördermittel durch die Schwerkraft transportiert werden können.

3. Ofen nach Anspruch 1, dadurch gekennzeichnet, daß der Transport der Produkte (17) mittels eines Förderbandes, einer Förderkette oder eines anderen Fördermitteltyps durchgeführt wird.

4. Ofen nach Anspruch 1, dadurch gekennzeichnet, daß der Transport der Produkte (17) in der Kammer (B) mittels einer vertikalen Kolben/Zylinderanordnung (24) durchgeführt wird, die am Boden der Kammer (B) angeordnet ist, oder mittels vertikal gleitbarer Klammern zum langsamen Absenken des Produktstapels in der Kammer (B), Klammermittel (34), die in der Kammer (B) knapp über dem Boden angeordnet sind, die zwischenzeitlich den Produktstapel (25) derart halten, daß das unterste Produkt im Stapel in den zweiten Tunnel (C) überführt werden kann.

5. Ofen nach Anspruch 1, wobei das Heizen mittels Öl- oder Gasverbrennung in einer Brennzone (22) erfolgt, dadurch gekennzeichnet, daß die Brennzone im unteren Teil der Brennkammer (B) angeordnet ist, und daß die Kammerwände mit Leitungskanälen (21) versehen sind, wobei die Abgase durch die Kanäle (21) aus der Brennzone (22) treten und weiter in Leitungen oder Kanäle (27) in den oberen Tunnelwänden (15, 18) geleitet werden.

6. Ofen nach Anspruch 5, dadurch gekennzeichnet, daß die Abgase nach Passage durch die Kanäle bzw. Leitungen (21, 27) mittels eines Gebläses (32) abgezogen und zu einer Gaswaschanordnung transportiert werden, worauf die Abgase nach Wäsche in den Ofenraum (35) geleitet werden, in dem die Hitzebehandlung der Produkte stattfindet, wobei dieses durch eine Einlaßleitung (33) im Kühltunnel (10) erfolgt, wobei das Abgas als Inertgas bei der Hitzebehandlung der Produkte verwendet wird.

7. Ofen nach Anspruch 5, wobei die hitzebehandelten Produkte niedrigflüchtige verbrennbare Gase abgeben, dadurch gekennzeichnet, daß die niedrigflüchtigen Gase aus dem Ofenraum (35) abgezogen und durch Leitungen (23) in die Brennzone (22) geleitet werden, in der sie als Brenngase für den Verbrennungsprozeß verwendet werden.

8. Ofen nach Anspruch 1, dadurch gekennzeichnet, daß die Kühlung der Produkte (17) im Kühltunnel (10) mittels frischer Luft erfolgt, die durch Leitungen oder Kanäle (30) in der Tunnelwand (28, 29) geleitet wird, worauf die frische Luft nach Durchtritt durch die Leitungen oder Kanäle (30) in die Leitungen oder Kanäle (21) am Boden der Brennkammer (B) geleitet wird, wobei die Leitungen oder Kanäle (21) mit der Brennzone (22) verbunden sind, wobei die frische Luft als Verbrennungsluft in der Brennzone (22) verwendet oder in die Atmosphäre abgegeben wird.

9. Ofen nach Anspruch 1, dadurch gekennzeichnet, daß das Vorheizen der Produkte (17) im Tunnel (A) und das Brennen der Produkte (17) in der Brennkammer (B) mittels elektrischer Heizelemente in den Tunnelwänden (15) bzw. Kammerwänden (19) erfolgt.

## Revendications

1. Four destiné au traitement thermique à haute température de produits plastiques ou durcis (17), notamment au traitement thermique (cuisson/calcination) de corps de carbone qui sont utilisés dans les cellules de réduction électrolytique d'alumine ou pour d'autres opérations électrométallurgiques, caractérisé en ce que le four est formé d'un premier tunnel ou tunnel supérieur (A) qui est horizontal ou légèrement incliné et dans lequel les produits (17) sont préchauffés, d'une cuve ou chambre de cuisson (B) raccordée au premier tunnel (A) et dans laquelle les produits (17) sont soumis à un traitement thermique à haute température, et d'un second tunnel ou tunnel inférieur (C) qui est horizontal ou légèrement incliné, qui est raccordé à la chambre de cuisson (B) et dans lequel les produits (17) se refroidissent, si bien que les produits (17), entourés d'une atmosphère gazeuse inerte, sont transportés dans le four par des transporteurs horizontaux (14) placés dans le premier et le second tunnel (A, C) et par un transporteur vertical (24, 26) placé dans la chambre de cuisson (B).

2. Four selon la revendication 1, caractérisé en ce que l'angle d'inclinaison du premier tunnel (A) et du second tunnel (C) est tel que les produits peuvent être transportés par des transporteurs à rouleaux ou glissants sous l'action de la force de pesanteur.

3. Four selon la revendication 1, caractérisé en ce que le transport des produits (17) est réalisé par des transporteurs menés à chaînes ou courroies ou par d'autres types de transporteurs.

4. Four selon la revendication 1, caractérisé en ce que le transport des produits (17) dans la chambre (B) est réalisé par un ensemble à vérin vertical (24) placé à la partie inférieure de la chambre (B) ou par des supports coulissant verticalement, assurant l'abaissement lent de la pile de produits dans la chambre (B), et par un dispositif (34) de serrage placé dans la chambre (B) légèrement au-dessus du fond et qui maintient par intermittence la pile de produits (25) de manière que le produit inférieur de la pile puisse être transféré dans le second tunnel (C).

5. Four selon la revendication 1, dans lequel le chauffage est réalisé par combustion d'un combustible gazeux ou fluide dans une zone (22) de combustion,
caractérisé en ce que la zone de combustion est placée à la partie inférieure de la chambre de cuisson (B), et les parois de la chambre ont des conduits (21) tels que les gaz de combustion circulent dans les conduits (21) à partir de la zone de combustion (22) et sont guidés dans des conduits (27) formés par les parois (15, 18) du tunnel supérieur.

6. Four selon la revendication 5, caractérisé en ce que les gaz de cheminée, lorsqu'ils ont circulé dans les conduits (21, 27), sont extraits par un ventilateur (32) et sont transportés vers un ensemble de lavage de gaz, et les gaz de combustion, après avoir été lavés, sont renvoyés à l'espace du four (35), dans lequel le traitement thermique du produit est réalisé, par un conduit d'entrée (33) débouchant dans le tunnel de refroidissement (C), si bien qu'ils sont utilisés comme gaz inerte pour le traitement thermique des produits.

7. Four selon la revendication 5, dans lequel les produits qui subissent le traitement thermique dégagent des gaz combustibles de faible volatilité,
caractérisé en ce que les gaz faiblement volatils sont extraits de l'espace (35) du four et sont guidés dans des conduits (23) vers la zone de combustion (22), et ils sont utilisés comme gaz combustibles pour l'opération de combustion.

8. Four selon la revendication 1, caractérisé en ce que le refroidissement des produits (17) dans le tunnel de refroidissement (C) est réalisé à l'aide d'air frais qui est acheminés par les conduits (30) placés dans les parois (28, 29) du tunnel, et en ce que l'air frais, après circulation dans les conduits (30), est guidé dans les conduits (21) formés à la partie inférieure de la chambre de cuisson (B), les conduits (21) étant raccordés à la zone de combustion (22), si bien que de l'air frais peut être utilisé comme air de combustion dans la zone de combustion (22) ou est évacué dans l'atmosphère.

9. Four selon la revendication 1, caractérisé en ce que le préchauffage des produits (17) dans le tunnel (A) et la cuisson des produits (17) dans la chambre de cuisson (B) sont réalisés à l'aide d'éléments électriques de chauffage placés dans les parois (15) du tunnel, respectivement dans les parois (19) de la chambre.
